# EUROPEAN PATENT APPLICATION

(11) **EP 4 080 435 A1**
(43) Date of publication of application: **26.10.2022**
(21) Application number: 22169128.0
(22) Date of filing: 21.04.2022
(51) Int. Cl.: G06Q 10/08

(54) **REAGENT MANAGEMENT SYSTEM**

(30) Priority: 21.04.2021 CN 202110432446
(71) Applicant: Shenzhen Mindray Bio-Medical Electronics Co., Ltd., Shenzhen, Guangdong 518057 (CN)
(72) Inventor: JI, Dewei, Shenzhen, 518057 (CN); WANG, Xia, Shenzhen, 518057 (CN); ZHAI, Shanshan, Shenzhen, 518057 (CN); XU, Yu, Shenzhen, 518057 (CN)
(74) Representative: KIPA AB

(57) **Abstract**

The disclosure provides a reagent management system configured to manage reagents of at least one sample analyzer and reagents of at least one warehouse for storing reagents, and the reagents of the at least one sample analyzer are from the reagents stored in the warehouse. The reagent management system includes: a memory configured to store executable program instructions; a processor configured to execute the program instructions that cause the processor to perform: obtaining a first remaining quantity of a first reagent of the warehouse and a second remaining quantity of the first reagent loaded in the sample analyzer; determining an actual remaining quantity of the first reagent based on the first remaining quantity and the second remaining quantity; and outputting purchase information of the first reagent when the actual remaining quantity of the first reagent meets a preset condition; and a display configured to display the purchase information.

## Description

### TECHNICAL FIELD

The disclosure generally relates to the technical field of medical devices, and more specifically to a reagent management system.

### BACKGROUND

Due to inventory capacity, validity period, costs, and other factors, in a laboratory or a clinical laboratory department, it is necessary to control the inventory of reagents of the same type to be within a reasonable range. In addition, it is necessary to avoid unexpected situations such as device downtime and failure to complete sample testing caused by insufficient inventory. Therefore, a reliable purchase recommendation system is required to assist in prompting purchase of reagents at appropriate time.

Therefore, in view of the above-mentioned problems, the disclosure proposes a new reagent management system.

### SUMMARY

The disclosure is proposed to solve at least one of the above-mentioned problems. Specifically, a first aspect of the disclosure provides a reagent management system. The reagent management system is configured to manage reagents of at least one sample analyzer and reagents of at least one warehouse for storing the reagents, and the reagents of the at least one sample analyzer are from the reagents stored in the warehouse. The reagent management system includes: a memory configured to store executable program instructions; one or more processors configured to execute the program instructions stored in the memory that cause the processor to perform the following steps: obtaining a first remaining quantity of a first reagent of the at least one warehouse and a second remaining quantity of the first reagent loaded in the at least one sample analyzer; determining an actual remaining quantity of the first reagent based on the first remaining quantity and the second remaining quantity; and outputting purchase information of the first reagent when the actual remaining quantity of the first reagent meets a preset condition; and a display configured to display the purchase information.

A second aspect of the disclosure provides a reagent management system for managing in vitro diagnostic reagents. The reagent management system includes: a memory configured to store executable program instructions; one or more processors configured to execute the program instructions stored in the memory that cause the processor to perform the following steps: obtaining a historical consumption rate within a preset time and a current inventory quantity of a first reagent in a reagent repository; and calculating a usable time for the current inventory quantity of the first reagent based on the historical consumption rate of the first reagent; and a display configured to display the usable time.

A third aspect of the disclosure provides a reagent management system for managing in vitro diagnostic reagents. The reagent management system includes: a memory configured to store executable program instructions; one or more processors configured to execute the program instructions stored in the memory that cause the processor to perform the following steps: obtaining a first historical consumption rate within a preset time and a first inventory quantity of a first reagent in a reagent repository at a first time point; calculating a first usable time for the first inventory quantity based on the first historical consumption rate; obtaining a second historical consumption rate within a preset time and a second inventory quantity of the first reagent in the reagent repository at a second time point, wherein the first historical consumption rate is greater than or equal to 1.5 times the second historical consumption rate; and calculating a second usable time for the second inventory quantity based on the second historical consumption rate of the first reagent; and a display configured to display the first usable time or the second usable time.

A fourth aspect of the disclosure provides a reagent management system, including: a memory configured to store executable program instructions; a database configured to record reagent information of reagents circulated in a reagent repository, the reagent information including at least reagent names and reagent lot numbers; one or more processors configured to execute the program instructions stored in the memory that cause the processor to perform the following steps: obtaining a current inventory quantity of a first reagent in the reagent repository; and when the current inventory quantity of the first reagent meets a preset condition, obtaining from the database a lot number of the first reagent ordered and/or inbounded last time and outputting purchase information of the first reagent, wherein the purchase information includes a reagent name of the first reagent recommended for purchase and the lot number of the first reagent ordered and/or inbounded last time; and a display configured to display the purchase information.

According to the reagent management system of the first aspect of the disclosure, the first remaining quantity of the first reagent in the warehouse and the second remaining quantity of the first reagent loaded in the sample analyzer are used as the actual remaining quantity of the first reagent, so that more accurate and reasonable purchase information can be output, and it helps control the inventory of reagents of the same type to be within a reasonable range, avoiding unexpected situations such as device downtime and failure to complete sample testing caused by insufficient inventory.

According to the reagent management systems of the second aspect and the third aspect of the disclosure, the usable time for the current inventory quantity of the first reagent is calculated based on the historical consumption rate of the first reagent, thereby improving the reference significance of the calculated usable time, so that a user intuitively obtains an estimated value of the usable time of the first reagent, and then determines, based on the usable time, whether to arrange reagent purchase. This avoids excessive purchase due to the deviation of the usable time from the current actual usage of the reagent, preventing the inventory quantity of the first reagent from exceeding a reasonable range, and avoids late purchase affecting sample testing.

According to the reagent management system of the fourth aspect of the disclosure, the lot number of the first reagent ordered and/or inbounded last time is prompted in the purchase information, so that a purchase manager can easily know the lot number of the reagent to be purchased, so as to make a purchase plan of preferentially purchasing reagents of the same lot. This avoids instrument (e.g., sample analyzer) testing, calibration, quality control, and recording operations due to changes in reagent lots, reducing time cost and labor cost of instrument users, and improving efficiency.

### BRIEF DESCRIPTION OF THE DRAWINGS

In order to illustrate the technical solutions in the embodiments of the disclosure more clearly, a brief introduction to the drawings required for the description of embodiments will be provided below. Obviously, the drawings in the following description are merely some of the embodiments of the disclosure, and those of ordinary skill in the art would also have been able to obtain other drawings according to these drawings without involving any inventive effort.
FIG. 1 is a schematic block diagram of a basic use procedure of reagent consumables according to an embodiment of the disclosure;
FIG. 2 is a schematic block diagram of a reagent management system according to an embodiment of the disclosure;
FIG. 3 is a schematic block diagram of a reagent management system according to another embodiment of the disclosure; and
FIG. 4 is a schematic block diagram of a reagent management system according to another embodiment of the disclosure.

### DESCRIPTION OF THE PREFERRED EMBODIMENTS

In order to make the objects, technical solutions, and advantages of the disclosure more apparent, the example embodiments according to the disclosure will be described in detail below with reference to the accompanying drawings. Apparently, the embodiments described are merely some, rather than all, of the embodiments of the disclosure. It should be understood that the disclosure is not limited by the example embodiments described herein. All other embodiments derived by those skilled in the art without creative efforts on the basis of the embodiments of the disclosure described in the disclosure shall fall within the scope of protection of the disclosure.

In the following description, a large number of specific details are given to provide a more thorough understanding of the disclosure. However, it is obvious to those skilled in the art that the disclosure can be implemented without one or more of these details. In other examples, some well-known technical features in the art are not described in order to avoid obscuring the disclosure.

It should be understood that, the disclosure can be implemented in different forms and should not be construed as being limited to the embodiments presented herein. On the contrary, these embodiments are provided to make the disclosure thorough and complete, and to fully convey the scope of the disclosure to those skilled in the art.

The terms used herein are intended only to describe specific embodiments and do not constitute a limitation to the disclosure. As used herein, the singular forms of "a", "an", and "said/the" are also intended to include plural forms, unless the context clearly indicates otherwise. It should also be appreciated that the terms "composed of' and/or "including", when used in the specification, determine the existence of described features, integers, steps, operations, elements, and/or components, but do not exclude the existence or addition of one or more other features, integers, steps, operations, elements, components, and/or groups thereof. As used herein, the term "and/or" includes any and all combinations of relevant listed items.

Due to the inventory capacity, validity period, costs, and other factors, in a laboratory or a clinical laboratory department, it is necessary to control the inventory of reagents of the same type to be within a reasonable range. In addition, it is necessary to avoid unexpected situations such as device downtime and failure to complete sample testing caused by insufficient inventory. Therefore, a reliable purchase recommendation system is required to assist in prompting purchase of reagents at appropriate time.

In view of the foregoing problems, the disclosure provides a reagent management system. The reagent management system is configured to manage reagents of at least one sample analyzer and reagents of at least one warehouse for storing reagents, and the reagents of the at least one sample analyzer are from the reagents stored in the warehouse. The reagent management system includes: a memory configured to store executable program instructions; one or more processors configured to execute the program instructions stored in the memory that cause the processor to perform the following steps: obtaining a first remaining quantity of a first reagent of the at least one warehouse and a second remaining quantity of the first reagent loaded in the at least one sample analyzer; determining an actual remaining quantity of the first reagent based on the first remaining quantity and the second remaining quantity; and outputting purchase information of the first reagent when the actual remaining quantity of the first reagent meets a preset condition; and a display configured to display the purchase information. According to the reagent management system of this embodiment of the disclosure, the first remaining quantity of the first reagent in the warehouse and the second remaining quantity of the first reagent load into the sample analyzer are used as the actual remaining quantity of the first reagent, so that more accurate and reasonable purchase information can be output, and it helps control the inventory of reagents of the same type to be within a reasonable range, avoiding unexpected situations such as device downtime and failure to complete sample testing caused by insufficient inventory.

For thorough understanding the disclosure, a detailed structure will be proposed in the following description to explain the technical solutions proposed in the disclosure. The optional embodiments of the disclosure are described in detail as follows. However, the disclosure may also have other implementations in addition to these detailed descri pti ons.

Specifically, the reagent management system of the disclosure will be described in detail below with reference to the accompanying drawings. In the case of no conflict, the embodiments and the features in implementations described below can be combined with each other.

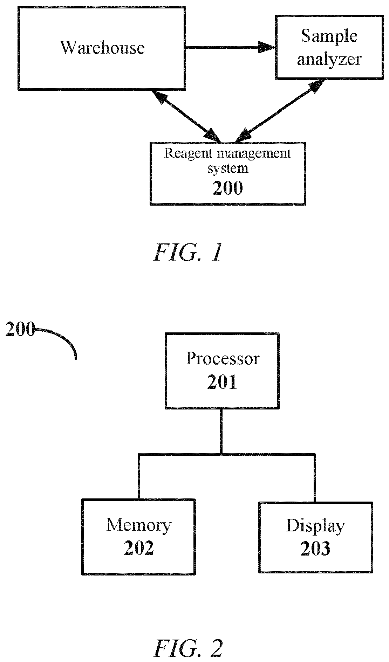

First, a reagent management system according to an embodiment of the disclosure is described with reference to FIGS. 1 and 2. FIG. 1 is a schematic block diagram of a basic use procedure of reagent consumables according to an embodiment of the disclosure; and FIG. 2 is a schematic block diagram of a reagent management system according to an embodiment of the disclosure.

As an example, as shown in FIG. 1, the reagent management system 200 in this embodiment of the disclosure may be configured to manage reagents of at least one sample analyzer and reagents of at least one warehouse for storing reagents, and the reagents of the at least one sample analyzer are from the reagents stored in the warehouse. The at least one sample analyzer and the at least one warehouse for storing reagents may belong to a same testing center, and the testing center may be a clinical laboratory department or a laboratory of a hospital, or a clinical laboratory department or a laboratory of a school and other medical research institutes, etc.

The warehouse for storing reagents may include warehouses of multiple levels, for example, a primary warehouse, a secondary warehouse, and a tertiary warehouse, wherein the tertiary warehouse is, for example, a refrigerator arranged in a clinical laboratory department.

The sample analyzer may be a analyzer of any type, e.g., an analyzer for in vitro diagnostics, including but not limited to, a hematology analyzer, a urine analyzer, a body fluid analyzer, etc. These analyzers all require reagent consumables to assist in sample testing.

In an example, as shown in FIG. 2, the reagent management system 200 includes one or more processors 201, a display 203, a memory 202, a communication interface, etc. These components are interconnected via a bus system and/or connection mechanism in another form (not shown). It should be noted that the components and structure of the reagent management system 200 shown in FIG. 2 are merely exemplary and not restrictive, and the reagent management system 200 may also have other components and structures as needed.

The memory 202 is configured to store various data and executable programs generated during the circulation of related reagents and the reagent use process of the sample analyzer, for example, to store a system program of the reagent management system 200, various application programs, or algorithms for implementing various specific functions. One or more computer program products may be included, and the computer program product may include computer-readable storage media of various forms, such as a volatile memory and/or a non-volatile memory. The volatile memory 202 may, for example, include a random access memory (RAM) and/or a cache memory 202 (cache), etc. The non-volatile memory may, for example, include a read-only memory (ROM), a hard disk, a flash memory, etc. In the reagent management system, all data that needs to be stored locally can be stored in the memory 202.

The processor 201 may be a central processing unit (CPU), a graphics processing unit (GPU), an application-specific integrated circuit (ASIC), a field-programmable gate array (FPGA), or processing units in other forms that have a data processing capability and/or an instruction execution capability, and the processor can control other components in the reagent management system 200 to perform desired functions. For example, the processor 201 can include one or more embedded processors, processor cores, microprocessors, logic circuits, hardware finite state machines (FSMs), digital signal processors (DSPs), graphics processing units (GPUs), or a combination thereof.

In an example, the reagent management system 200 further includes a communication interface (not shown) for communication between the components of the reagent management system 200, and between the components of the reagent management system 200 and other apparatuses (e.g., a sample analyzer, a server, and a supplier reagent management system) outside the system.

The communication interface may be an interface of any currently known communication protocol, such as a wired interface or a wireless interface. The communication interface may include one or more serial ports, USB interfaces, Ethernet ports, Wi-Fi, wired networks, DVI interfaces, device integrated interconnect modules, or other suitable ports, interfaces, or connections. The reagent management system may further access a wireless network based on a communications standard, such as Wi-Fi, 2G, 3G, 4G, 5G, or a combination thereof. In an exemplary embodiment, the communication interface receives broadcast signals or broadcast-related information from an external broadcast management system via a broadcast channel. In an exemplary embodiment, the communication interface further includes a near-field communication (NFC) module to facilitate short-range communication. For example, the NFC module may be implemented on the basis of a radio frequency identification (RFID) technology, an infrared data association (IrDA) technology, an ultra-wideband (UWB) technology, a Bluetooth (BT) technology, and other technologies.

In an example, the reagent management system further includes an input apparatus (not shown). The input apparatus may be an apparatus used by a user to input instructions, and may include one or more of a keyboard, a trackball, a mouse, a microphone, a touchscreen, and the like, or another input apparatus composed of a control button.

The reagent management system in the embodiments of the disclosure further includes an output apparatus, which may output various information (such as an image or sound) to the outside (such as a user), and may include one or more of the display 203, a speaker, etc.

In the embodiments of the disclosure, the display 203 of the reagent management system may be a touchscreen display, a liquid crystal display, etc., or may be an independent display 203, such as a liquid crystal display or a television, independent of the reagent management system, or may be a display on an electronic apparatus such as a mobile phone or a tablet computer. The display 203 may be configured to display information input by or provided to a user and various graphical user interfaces of the reagent management system, and these graphical user interfaces may be composed of graphics, text, icons, video, and any combination thereof.

The reagent management system further includes a user interface, through which a user of the reagent management system can control an operation of the reagent management system. The user interface may include the display 203, which may include a touchscreen that allows the user to input an operation instruction to the reagent management system via the display 203, and/or include one or more control panels, etc., through which the user can control the operation of the reagent management system.

In an example, the processor 201 is configured to execute the program instructions stored in the memory that cause the processor to perform the following steps: obtaining a first remaining quantity of a first reagent of the at least one warehouse and a second remaining quantity of the first reagent loaded in the at least one sample analyzer; determining an actual remaining quantity of the first reagent based on the first remaining quantity and the second remaining quantity; and outputting purchase information of the first reagent when the actual remaining quantity of the first reagent meets a preset condition. The first remaining quantity of the first reagent in the warehouse and the second remaining quantity of the first reagent loaded in the sample analyzer are used as the actual remaining quantity of the first reagent, so that more accurate and reasonable purchase information can be output, and it helps control the inventory of reagents of the same type to be within a reasonable range, avoiding unexpected situations such as device downtime and failure to complete sample testing caused by insufficient inventory.

The first reagent may be any reagent to be used by the sample analyzer, such as a diluent, a hemolytic agent, etc., which is not specifically limited herein.

In the disclosure, a statistical unit of the actual remaining quantity of the first reagent includes at least one of the following units: pack, bottle, or a number of samples that can be tested. For example, the actual remaining quantity may be N packs, or N bottles or a quantity N of samples that can be tested, or may be N packs and M bottles, etc.

In an example, the processor 201 is further configured to perform the following steps: when there are a plurality of warehouses, obtaining the first remaining quantity of the first reagent in each warehouse, and when there are a plurality of sample analyzers, obtaining the second remaining quantity of the first reagent on a reagent loading portion of each sample analyzer; and after summing the first remaining quantities of the first reagent in all warehouses and the second remaining quantities of the first reagent on the reagent loading portions of all sample analyzers, obtaining the actual remaining quantity of the first reagent.

The first remaining quantity may be determined by the system based on an inbound inventory quantity and an outbound inventory quantity of the first reagent in each warehouse, or may be obtained by actually taking stock of an inventory quantity of the first reagent in each warehouse. The second remaining quantity may be obtained based on a current remaining quantity of the first reagent in the loading portion of each sample analyzer, which is entered by the user, or the second remaining quantity may be automatically obtained by the system by calculation based on a quantity of the first reagent initially loaded into each sample analyzer and a testing quantity of samples that each sample analyzer has currently tested using the first reagent. When the system automatically obtains the first remaining quantity or the second remaining quantity, it can avoid the problem that miss and errors easily occur by manually counting reagents loaded in the sample analyzer and reagents in the tertiary library such as a refrigerator, improving the accuracy of statistics of the remaining quantity of the reagent.

The processor 201 is further configured to output purchase information of the first reagent when the actual remaining quantity of the first reagent meets a preset condition. For example, the preset condition is that the actual remaining quantity is less than or equal to a threshold quantity, that is, when the actual remaining quantity of the first reagent is less than or equal to the threshold quantity, the purchase information of the first reagent is outputted. The threshold quantity may be reasonably set according to actual needs, which is not specifically limited herein. For another example, the preset condition includes: a usable time for the actual remaining quantity is less than or equal to a threshold time, that is, when the usable time for the actual remaining quantity of the first reagent is less than or equal to the threshold time, the purchase information of the first reagent is outputted. The threshold time may be reasonably set according to actual needs, for example, may be one week, two weeks, one month, etc.

The usable time for the actual remaining quantity may be obtained based on any suitable method well known to those skilled in the art. For example, the usable time is determined based on the actual remaining quantity and a historical consumption rate of the first reagent, and the historical consumption rate is determined based on a historically consumed quantity of the first reagent within a preset time. The historically consumed quantity of the first reagent may be determined based on an inbound inventory quantity or an outbound inventory quantity of the first reagent of the warehouse within a preset time or a quantity of the first reagent used by all sample analyzers within a preset time. The preset time may be reasonably set according to actual needs. For example, the preset time is last one week, or last two weeks, or last one month from the current time. The historically consumed quantity of the first reagent consumed recently before the current time is used to determine the historical consumption rate of the first reagent, which can more accurately reflect the consumption rate of the first reagent in the recent time, thereby improving the reference significance of the calculated usable time. This prevents the inventory quantity of the first reagent from exceeding a reasonable range due to the deviation of the usable time from the current actual usage of the reagent, and avoids late purchase affecting sample testing.

In an example, the purchase information includes any one of the following information: a recommended purchase quantity and purchase prompt information. For example, when the actual remaining quantity of the first reagent meets the preset condition, the purchase prompt information for the first reagent is outputted, and the prompt information is, for example, purchase prompt information displayed on the display 203 in a differentiated display manner. The differentiated display manner includes, but is not limited to, blinking a display window of the purchase prompt information, highlighting the display window of the purchase prompt information, or displaying the purchase prompt information in different color shading. The differentiated display enables the user to obtain the prompt information in a timely and conspicuous manner, and to decide, based on the prompt information, whether to purchase the first reagent.

The purchase information further includes the recommended purchase quantity, wherein the recommended purchase quantity is determined based on a historically consumed quantity of the first reagent, and the historically consumed quantity of the first reagent is determined based on an inbound inventory quantity or an outbound inventory quantity of the first reagent of the warehouse within a preset time or a quantity of the first reagent used by all sample analyzers within a preset time. For example, the historical consumption rate may be obtained based on a historically consumed quantity of the first reagent, and an estimated use quantity of the first reagent required to meet a preset use time (the preset use time may be reasonably set according to actual needs, for example, is one week, half a month, one month, or two months) is obtained based on the historical consumption rate. The recommended purchase quantity is the estimated use quantity of the first reagent, or the recommended purchase quantity is a difference between the estimated use quantity and the actual remaining quantity of the first reagent. Since the recommended purchase quantity is determined based on the historically consumed quantity of the first reagent, the recommended purchase quantity can much more conform to the current consumption of the first reagent. This prevents a reagent inventory quantity from exceeding a reasonable range due to excessive purchase and too slow consumption of the first reagent, and can also avoid the problem of no reagents being available due to the recent surge in reagent usage and restrained or late purchase.

In another example, the recommended purchase quantity may alternatively be a difference between a preset inventory quantity of the first reagent and the actual remaining quantity of the first reagent, wherein the preset inventory quantity is also a preset inventory upper limit.

In an example, the processor 201 is further configured to perform the following steps: obtaining a current inventory quantity of the first reagent in a reagent supplier warehouse; and when the current inventory quantity of the first reagent in the supplier warehouse is greater than the recommended purchase quantity of the first reagent, outputting the purchase information including the recommended purchase quantity. In this way, it can prevent a recommended purchase quantity greater than the supplier inventory from being still recommended to the user when the supplier warehouse inventory is insufficient, which simplifies the user's operation.

In an example, the processor 201 is further configured to perform the following step: when the current inventory quantity of the first reagent in the supplier warehouse is less than the recommended purchase quantity of the first reagent, outputting the purchase information including prompt information, wherein the prompt information may include the current inventory quantity of the first reagent in the supplier warehouse, to notify the user of a currently required purchase quantity of the first reagent and a quantity of the first reagent that can be purchased from the supplier warehouse. In this way, the user does not need to obtain the reagent quantity in the supplier warehouse by search and other methods, which helps make accurate and effective purchase strategies in a timely manner.

Optionally, the reagent management system of the disclosure is communicatively connected to the supplier reagent management system, or the reagent management system of the disclosure obtains the current inventory quantity of the first reagent from the supplier reagent management system via a server.

In this application, the display 203 is configured to display the purchase information, wherein the purchase information may be displayed in a display window that pops up from a main interface of the display, or may be displayed in other suitable manners.

Optionally, the display 203 is further configured to display at least one of the following information: the first remaining quantity of the first reagent of each warehouse, a sum of the first remaining quantities of the first reagent of all warehouses, the second remaining quantity of the first reagent in reagents loaded in each sample analyzer, a sum of the second remaining quantities of the first reagent loaded in all sample analyzers, and the actual remaining quantity of the first reagent. Further, the display 203 is further configured to display the usable time of the first reagent. By displaying the foregoing information, it is convenient for the user to intuitively and quickly obtain the required information when needed, and then to determine the inventory of the first reagent, etc., which helps the user make more reasonable purchase strategies at appropriate time.

In an example, a first button is displayed on a first display interface of the display 203, the first display interface is configured to display the purchase prompt information, and the processor 201 is further configured to: obtain a first user instruction that is input using the first button, and control the display to display the purchase information including the recommended purchase quantity based on the first user instruction. Such a setting can provide users with more options, and the users open the purchase information including the recommended purchase quantity according to their own needs only when they want to refer to the recommended purchase quantity.

In an example, a second button is displayed on the first display interface of the display 203, the first display interface is configured to display the purchase prompt information, and the processor 201 is further configured to: obtain a second user instruction that is input using the second button, and control the display to display a purchase information setting interface based on the second user instruction, wherein the purchase information setting interface is configured to receive input information of a user, the input information is used for setting a parameter related to reagent purchase, and the parameter related to reagent includes, but is not limited to, the number of reagents, etc.

Optionally, the recommended purchase quantity is displayed on a second interface of the display 203, or the recommended purchase quantity is displayed on the first interface of the display 203, and the first interface is further configured to display the purchase prompt information. Optionally, the first display interface and/or the second display interface are/is further configured to display at least one of the following buttons: confirm button, modify button, and close button.

In an embodiment, the processor 201 is further configured to perform the following steps: obtaining unique identification code information of purchased reagents (e.g., purchased first reagent); and obtaining logistics and transportation information of the purchased reagents based on the unique identification code information, wherein the logistics and transportation information includes at least one of the following information: supplier's shipment information, transit stations through which the purchased reagents have passed, time information of arrival at each transit station, and an expected delivery time; and the display 203 is further configured to display the logistics and transportation information. The unique identification code information may be any identification code that can uniquely identify the purchased reagents, for example, may be a reagent code, a logistics number of the reagent, and the like. Compared with a conventional reagent management system which cannot track the actual logistics and transportation of the purchased reagents and can only rely on calls for confirmation, the reagent management system of the disclosure obtains the logistics and transportation of the purchased reagents based on the unique identification code information, to provide a user with accurate expected delivery time and other information, which saves the user's time and energy, and facilitates the user in tracking reagents and making follow-up arrangements based on the logistics information.

In conclusion, according to the reagent management system of this embodiment of the disclosure, the first remaining quantity of the first reagent in the warehouse and the second remaining quantity of the first reagent loaded in the sample analyzer are used as the actual remaining quantity of the first reagent, so that more accurate and reasonable purchase information can be output, and it helps control the inventory of reagents of the same type to be within a reasonable range, avoiding unexpected situations such as device downtime and failure to complete sample testing caused by insufficient inventory.

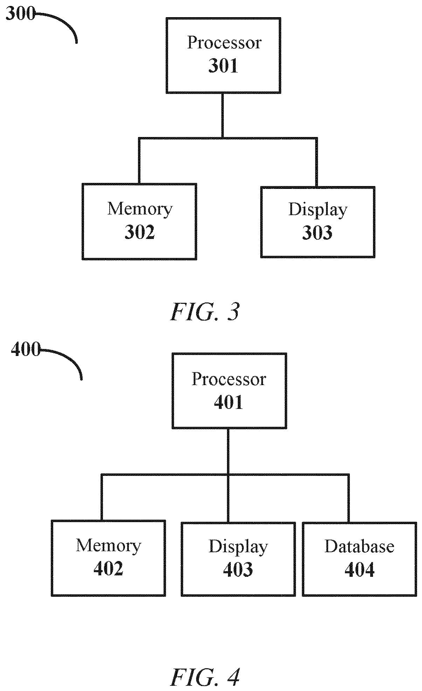

A reagent management system according to another embodiment of the disclosure is described below with reference to FIG. 3. FIG. 3 is a schematic block diagram of a reagent management system according to another embodiment of the disclosure.

In an example, as shown in FIG. 3, the reagent management system 300 includes one or more processors 301, a display 303, a memory 302, a communication interface, and the like. These components are interconnected via a bus system and/or another form of connection mechanism (not shown). It should be noted that the components and structure of the reagent management system 300 shown in FIG. 3 are merely exemplary and not restrictive, and the reagent management system 300 may also have other components and structures as required. To avoid repetition, for the description of some details of the reagent management system 300, reference may be made to the related content of the reagent management system 200 under the premise of no conflict.

The reagent management system 300 is used for managing in vitro diagnostic reagents, wherein the in vitro diagnostic reagents are also reagents of sample analyzers used for in vitro diagnostics, for example, reagents used for testing and diagnosis of blood, urine, body fluid, tissue, etc.

In an example, as shown in FIG. 3, the memory 302 is configured to store executable program instructions; the one or more processors 301 are configured to execute the program instructions stored in the memory 302 that cause the processor 301 to perform the following steps: obtaining a historical consumption rate of a first reagent within a preset time and a current inventory quantity of the first reagent in a reagent repository; and calculating a usable time for the current inventory quantity of the first reagent based on the historical consumption rate of the first reagent; and the display is configured to display the usable time. According to the reagent management system of this embodiment, the usable time for the current inventory quantity of the first reagent is calculated based on the historical consumption rate of the first reagent, thereby improving the reference significance of the calculated usable time, so that a user intuitively obtains an estimated value of the usable time of the first reagent, and then determines, based on the usable time, whether to arrange reagent purchase. This avoids excessive purchase due to the deviation of the usable time from the current actual usage of the reagent, preventing the inventory quantity of the first reagent from exceeding a reasonable range, and avoids late purchase affecting sample testing.

In an example, the processor 301 is configured to obtain the historical consumption rate within the preset time and the current inventory quantity of the first reagent in the reagent repository, wherein the historical consumption rate within the preset time is calculated based on at least one of a historically consumed quantity in a previous time period before the current time, and a historically consumed quantity in a past same time period. For example, the previous time period before the current time is, for example, a time period before the current time, e.g., one week, two weeks, one month before the current time, etc. These time periods are only examples, and may be reasonably set according to actual needs. For example, the processor 301 can obtain input information of the preset time input by a user, and determine the preset time based on the input information.

For another example, the historical consumption rate within the preset time is calculated based on a historically consumed quantity in the past same time period, and the historically consumed quantity in the past same time period may be a historically consumed quantity in the same time period in the past year or years. For example, the current time is March 1, 2021, and the historical consumption rate within the preset time may be calculated based on a historically consumed quantity in the same period after March 1, 2020. Alternatively, the historical consumption rate within the preset time may be calculated based on historically consumed quantities in a plurality of past same time periods. For example, the historical consumption rate within the preset time is calculated based on historically consumed quantities in the same periods of past two years, three years, or four years, and the average or maximum value of a plurality of historical consumption rates can be taken for calculation.

In an example, the reagent repository includes a reagent loading portion of a sample analyzer and/or a warehouse for storing reagents, and the warehouse for storing reagents includes but is not limited to a hospital's primary library, secondary library, tertiary library, etc. Optionally, when the reagent repository includes the reagent loading portion of the sample analyzer, the historical consumption rate of the first reagent is calculated based on a historically consumed quantity for the sample analyzer within the preset time, wherein for the calculation of the historically consumed quantity, reference may be made to the foregoing related description. When the reagent repository includes the warehouse for storing reagents and does not include the reagent loading portion of the sample analyzer, the historical consumption rate of the first reagent is calculated based on an outbound inventory quantity or an inbound inventory quantity of the warehouse. In other words, the historically consumed quantity of the first reagent is calculated based on the outbound inventory quantity or the inbound inventory quantity of the warehouse, and then the historical consumption rate is calculated based on the historically consumed quantity. For example, the historically consumed quantity is divided by the preset time to obtain a historically consumed quantity per unit time, such as a daily average consumed quantity, etc.

In an example, the processor 301 is further configured to perform the following step: when the usable time for the first reagent meets a first preset condition, outputting purchase information of the first reagent, wherein the first preset condition includes: the usable time for the current inventory quantity of the first reagent in the reagent repository being less than or equal to a threshold time. In other words, when the usable time of the first reagent is less than or equal to the threshold time, the purchase information of the first reagent is outputted. The threshold time may be reasonably set according to actual needs, for example, may be one week, two weeks, one month, etc. Compared with the manner of prompting only relying on upper and lower limit settings of the reagent inventory, and issuing a purchase prompt when the inventory reaches the lower limit, in this embodiment of the disclosure, the purchase prompt is issued based on the usable time, which can avoid the problem of no reagents being available due to the recent surge in reagent usage and late purchase.

In another example, the processor 301 is further configured to perform the following step: when the current inventory quantity of the first reagent meets a second preset condition, output purchase information of the first reagent, wherein the second preset condition includes: the current inventory quantity of the first reagent in the reagent repository being less than or equal to a threshold quantity. In other words, when the current inventory quantity of the first reagent is less than or equal to the threshold quantity, the purchase information of the first reagent is outputted. The threshold quantity may be reasonably set according to actual needs, which is not specifically limited herein. The processor 301 may obtain input information of the threshold quantity input by a user, and set the threshold quantity.

Still referring to FIG. 3, the disclosure further provides a reagent management system 300. The reagent management system 300 is used for managing in vitro diagnostic reagents. The reagent management system 300 includes: a memory 302 configured to store executable program instructions; one or more processors configured to execute the program instructions stored in the memory that cause the processor to perform the following steps: obtaining a first historical consumption rate of a first reagent within a preset time and a first inventory quantity of the first reagent in a reagent repository at a first time point; calculating a first usable time for the first inventory quantity based on the first historical consumption rate; obtaining a second historical consumption rate of the first reagent within a preset time and a second inventory quantity of the first reagent in the reagent repository at a second time point, wherein the first historical consumption rate is greater than or equal to 1.5 times the second historical consumption rate; and further, the first historical consumption rate may also be greater than or equal to 2 times the second historical consumption rate; and calculating a second usable time for the second inventory quantity based on the second historical consumption rate of the first reagent. The first time point and the second time point may be time points in different months or different seasons in a year. The first time point may be any time point in a first time period, for example, if the first time period is March to April, the first time point is any time from March to April. The second time point may also be any time point in a second time period, for example, any time from September to October. The time mentioned above is only an example and does not constitute a limitation.

The display 303 is configured to display the first usable time or the second usable time.

It should be noted that in the disclosure, for the calculation of the first historical consumption rate, the first inventory quantity, the first usable time, the second historical consumption rate, the second inventory quantity, and the second usable time, reference may be made to the foregoing related description, which is not repeated herein. When the reagent inventory quantities are the same, the usable time varies due to different reagent consumption rates.

In conclusion, according to the reagent management system 300 of this embodiment, the usable time for the current inventory quantity of the first reagent is calculated based on the historical consumption rate of the first reagent, thereby improving the reference significance of the calculated usable time, so that a user intuitively obtains an estimated value of the usable time of the first reagent, and then determines, based on the usable time, whether to arrange reagent purchase. This avoids excessive purchase due to the deviation of the usable time from the current actual usage of the reagent, preventing the inventory quantity of the first reagent from exceeding a reasonable range, and avoids late purchase affecting sample testing.

Still another embodiment of the disclosure further provides a reagent management system, and the reagent management system 400 of this embodiment of the disclosure is described with reference to FIG. 4. On the premise of no conflict, the features of the reagent management system in the foregoing description may also be applicable to the reagent management system in this embodiment, and to avoid repetition, for the detailed description of some features, reference may also be made to the foregoing reagent management system.

As shown in FIG. 4, the reagent management system 400 includes: a processor 401, a memory 402, a display 403, and a database 404, wherein the memory 402 is configured to store executable program instructions; and the one or more processors 401 are configured to execute the program instructions stored in the memory 402 that cause the processor 401 to perform the following steps: obtaining a current inventory quantity of a first reagent in the reagent repository; and when the current inventory quantity of the first reagent meets a preset condition, obtaining, from the database 404, a lot number of the first reagent ordered and/or inbounded last time, and outputting purchase information of the first reagent, wherein the purchase information includes a reagent name of the first reagent recommended for purchase and the lot number of the first reagent ordered and/or inbounded last time. Optionally, the purchase information further includes a recommended purchase quantity. The display 403 is configured to display the purchase information. The lot number of the first reagent ordered and/or inbounded last time is prompted in the purchase information, so that a purchase manager can easily know the lot number of the reagent to be purchased, so as to make a purchase plan of preferentially purchasing reagents of the same lot. This avoids instrument (e.g., sample analyzer) testing, calibration, quality control, and recording operations due to changes in reagent lots, reducing time costs and labor costs of instrument users, and improving efficiency.

The database 404 may be any database for storing information related to the first reagent, for example, for storing information such as the lot number of the first reagent ordered and/or inbounded by the user last time. The database may be set in a local system or may be set in a remote system, such as a server. The reagent management system 400 may be communicatively connected to the database 404, so as to obtain the information such as the lot number of the first reagent ordered and/or inbounded by the user last time.

Exemplarily, when a quantity of lot numbers of the first reagent ordered and/or inbounded last time is greater than or equal to 2, the purchase information includes at least one lot number of the first reagent. The system may select and prompt any one of the lot numbers to a user, or the system may display a plurality of lot numbers and then select, based on a user instruction, a lot number for purchase.

In an example, the processor 401 is further configured to perform the following steps: obtaining a supplier inventory quantity of the first reagent with a lot number in a reagent supplier warehouse management system, which lot number corresponds to the lot number in the purchase information, and obtaining a recommended purchase quantity in the purchase information; and when the supplier inventory quantity is greater than or equal to the recommended purchase quantity, outputting the purchase information, and the purchase information further includes a recommended purchase quantity. The reagent management system 400 may obtain the supplier inventory quantity of the first reagent with a lot number corresponding to that in the purchase information from the reagent supplier warehouse management system in any suitable manner. For example, the reagent management system 400 is directly communicatively connected to the reagent supplier warehouse management system, so as to obtain the supplier inventory quantity, or obtain the supplier inventory quantity of the first reagent with a lot number corresponding to that in the purchase information from the reagent supplier warehouse management system via a server. In this way, the user can be better assisted in making a reasonable purchase plan, and the user's time and energy can be saved.

In another example, when a quantity of lot numbers of the first reagent is greater than or equal to 2, the processor is further configured to perform the following steps: obtain a supplier inventory quantity of the first reagent with a corresponding lot number in a reagent supplier warehouse, and obtaining a recommended purchase quantity in the purchase information; and when the supplier inventory quantity for at least one lot number is greater than or equal to the recommended purchase quantity, outputting the purchase information, and the purchase information includes the lot number for the supplier inventory quantity greater than or equal to the recommended purchase quantity and the recommended purchase quantity. In this way, the user can be better assisted in making a reasonable purchase plan, and the user's time and energy can be saved.

In this embodiment of the disclosure, when inventory quantities of all lot numbers of the first reagent in the supplier warehouse fail to meet the recommended purchase quantity, a quantity of the first reagent of each lot number in the supplier warehouse may be output to the reagent management system, and the display 403 of the reagent management system may display the quantity of the first reagent, so as to help the user make a reasonable purchase plan based on the quantity.

In this embodiment of the disclosure, when the current inventory quantity of the first reagent meets the preset condition, the lot number of the first reagent ordered and/or inbounded last time is obtained from the database 404, and the purchase information for the first reagent is outputted, wherein the preset condition includes: the current inventory quantity is less than or equal to a threshold quantity; or a usable time for the current inventory quantity is less than or equal to a threshold time. Specifically, for the calculation of the current inventory quantity and the usable time, reference may be made to the foregoing description, which is not repeated herein.

For some detailed description of the reagent management system 400 in this embodiment of the disclosure, reference may further be made to the foregoing reagent management system. For example, the reagent management system in this embodiment of the disclosure further includes an input apparatus and a communication interface. For specific related description, reference may be made to the foregoing reagent management system, which is not repeated herein.

According to the reagent management system 400 in this embodiment of the disclosure, the lot number of the first reagent ordered and/or inbounded last time is prompted in the purchase information, and a purchase manager can easily know the lot number of the reagent to be purchased, so as to make a purchase plan of preferentially purchasing reagents of the same lot. This avoids instrument (e.g., sample analyzer) testing, calibration, quality control, and recording operations due to changes in reagent lots, reducing time and labor costs of instrument users, and improving efficiency.

While example embodiments have been described herein with reference to the accompanying drawings, it should be understood that the above example embodiments are merely illustrative and are not intended to limit the scope of the disclosure thereto. Those of ordinary skill in the art may make various changes and modifications therein without departing from the scope and spirit of the disclosure. All such changes and modifications are intended to be included in the scope of the disclosure as claimed in the appended claims.

Those of ordinary skill in the art would have appreciated that the units and algorithm steps of the examples described in conjunction with the embodiments disclosed herein may be implemented in electronic hardware or a combination of computer software and electronic hardware. Whether the functions are performed by hardware or software depends on particular applications and design constraint conditions of the technical solutions. Those skilled in the art could use different methods to implement the described functions for each particular application, but such implementation should not be considered to be beyond the scope of the disclosure.

In several embodiments provided in the disclosure, it should be understood that the disclosed devices and methods may be implemented in other manners. For example, the device embodiments described above are merely exemplary. For example, the division of units is merely a logical function division. In actual implementations, there may be other division methods. For example, a plurality of units or components may be combined or integrated into another device, or some features may be omitted or not implemented.

A large number of specific details are explained in this description provided herein. However, it can be understood that the embodiments of the disclosure can be practiced without these specific details. In some instances, well-known methods, structures, and technologies are not shown in detail, so as not to obscure the understanding of this description.

Similarly, it should be understood that in order to simplify the disclosure and help to understand one or more of various aspects of the disclosure, in the description of the exemplary embodiments of the disclosure, various features of the disclosure are sometimes together grouped into an individual embodiment, figure or description thereof. However, the method of the disclosure should not be construed as reflecting the following intention: namely, the disclosure set forth requires more features than those explicitly stated in each claim. More precisely, as reflected by the corresponding claims, the inventive point thereof lies in that features that are fewer than all the features of an individual embodiment disclosed may be used to solve the corresponding technical problem. Therefore, the claims in accordance with the particular embodiments are thereby explicitly incorporated into the particular embodiments, where each claim itself serves as an individual embodiment of the disclosure.

Those skilled in the art should understand that, in addition to the case where features are mutually exclusive, any combination may be used to combine all the features disclosed in this description (along with the appended claims, abstract, and drawings) and all the processes or units of any of methods or devices as disclosed. Unless explicitly stated otherwise, each feature disclosed in this specification (along with the appended claims, abstract, and drawings) may be replaced by an alternative feature that provides the same, equivalent, or similar object.

In addition, those skilled in the art should understand that although some of the embodiments described herein include some but not other features included in other embodiments, combinations of features of different embodiments are meant to be within the scope of the disclosure, and form different embodiments. For example, in the claims, any one of the embodiments set forth thereby can be used in any combination.

Various embodiments regarding components in the disclosure may be implemented in hardware, or implemented by software modules running on one or more processors, or implemented in a combination thereof. It should be understood for those skilled in the art that a microprocessor or a digital signal processor (DSP) may be used in practice to implement some or all of the functions of some modules according to the embodiments of the disclosure. The disclosure may further be implemented as an apparatus program (e.g. a computer program and a computer program product) for executing some or all of the methods described herein. Such a program for implementing the disclosure may be stored on a computer-readable medium, or may be in the form of one or more signals. Such a signal may be downloaded from an Internet website, or provided on a carrier signal, or provided in any other form.

It should be noted that the description of the disclosure made in the above-mentioned embodiments is not to limit the disclosure, and those skilled in the art may design alternative embodiments without departing from the scope of the appended claims. In the claims, any reference signs placed between parentheses should not be construed as limitation on the claims. The disclosure may be implemented by means of hardware including several different elements and by means of an appropriately programmed computer. In unit claims listing several apparatuses, several of these apparatuses may be specifically embodied by one and the same item of hardware. The use of the terms "first", "second", "third", etc. does not indicate any order. These terms may be interpreted as names.

## Claims

1. A reagent management system, **characterized in that** the reagent management system is configured to manage reagents of at least one sample analyzer and reagents of at least one warehouse for storing reagents, and the reagents of the at least one sample analyzer are from the reagents stored in the warehouse, wherein the reagent management system comprises:
a memory configured to store executable program instructions;
one or more processors configured to execute the program instructions stored in the memory that cause the processor to perform the following steps:
obtaining a first remaining quantity of a first reagent of the at least one warehouse and a second remaining quantity of the first reagent loaded in the at least one sample analyzer;
determining an actual remaining quantity of the first reagent based on the first remaining quantity and the second remaining quantity; and
outputting purchase information of the first reagent when the actual remaining quantity of the first reagent meets a preset condition; and
a display configured to display the purchase information.

2. The reagent management system of claim 1, **characterized in that** a statistical unit of the actual remaining quantity comprises at least one of the following units: pack, bottle, or a number of samples that can be tested.

3. The reagent management system of claim 1, **characterized in that** the display is further configured to display at least one of the following information: the first remaining quantity of the first reagent of each warehouse, a sum of the first remaining quantities of the first reagent of all warehouses, the second remaining quantity of the first reagent loaded in each sample analyzer, a sum of the second remaining quantities of the first reagent loaded in all sample analyzers, and the actual remaining quantity.

4. The reagent management system of claim 1, **characterized in that** the preset condition comprises:
the actual remaining quantity being less than or equal to a threshold quantity; or
a usable time for the actual remaining quantity being less than or equal to a threshold time.

5. The reagent management system of claim 4, **characterized in that** the usable time is determined based on the actual remaining quantity and a historical consumption rate of the first reagent, and the historical consumption rate is determined based on a historically consumed quantity of the first reagent within a preset time.

6. The reagent management system of claim 1, **characterized in that** the processor is further configured to perform the following steps:
obtaining a current inventory quantity of the first reagent in a reagent supplier warehouse; and
when the current inventory quantity of the first reagent in the supplier warehouse is greater than a recommended purchase quantity of the first reagent, outputting the purchase information including the recommended purchase quantity;
or
**characterized in that** the purchase information comprises a recommended purchase quantity, the recommended purchase quantity is determined based on a historically consumed quantity of the first reagent, and the historically consumed quantity of the first reagent is determined based on an inbound inventory quantity or an outbound inventory quantity of the first reagent of the warehouse within a preset time or a quantity of the first reagent used by all sample analyzers within a preset time;
or
**characterized in that** the processor is further configured to perform the following steps:
obtaining unique identification code information of purchased reagents; and
obtaining logistics and transportation information of the purchased reagents based on the unique identification code information, wherein the logistics and transportation information comprises at least one of the following information: supplier's shipment information, transit stations through which the purchased reagents have passed, time information of arrival at each transit station, and an expected delivery time; and
the display is further configured to display the logistics and transportation information.

7. A reagent management system for managing in vitro diagnostic reagents, **characterized in that** the reagent management system comprises:
a memory configured to store executable program instructions;
one or more processors configured to execute the program instructions stored in the memory that cause the processor to perform the following steps:
obtaining a historical consumption rate of a first reagent within a preset time and a current inventory quantity of the first reagent in a reagent repository; and
calculating a usable time for the current inventory quantity of the first reagent based on the historical consumption rate of the first reagent; and
a display configured to display the usable time.

8. The reagent management system of claim 7, **characterized in that** the historical consumption rate within the preset time is calculated based on at least one of a historically consumed quantity in a previous time period before current time, and a historically consumed quantity in a past same time period.

9. The reagent management system of claim 7, **characterized in that**
the processor is further configured to perform the following step: when the usable time of the first reagent meets a first preset condition, outputting purchase information of the first reagent; or when the current inventory quantity of the first reagent meets a second preset condition, outputting purchase information of the first reagent; and
the display is further configured to display the purchase information.

10. The reagent management system of claim 7, **characterized in that** the first preset condition comprises:
the usable time for the current inventory quantity being less than or equal to a threshold time; or
the current inventory quantity being less than or equal to a threshold quantity.

11. The reagent management system of claim 7, **characterized in that** the reagent repository comprises a reagent loading portion of a sample analyzer and/or a warehouse for storing reagents; or
when the reagent repository is the reagent loading portion of the sample analyzer, the historical consumption rate of the first reagent is calculated based on a historically consumed quantity of the sample analyzer within the preset time; or
when the reagent repository is the warehouse for storing reagents, the historical consumption rate of the first reagent is calculated based on an outbound inventory quantity or an inbound inventory quantity of the warehouse.

12. A reagent management system for managing in vitro diagnostic reagents, **characterized in that** the reagent management system comprises:
a memory configured to store executable program instructions;
one or more processors configured to execute the program instructions stored in the memory that cause the processor to perform the following steps:
obtaining a first historical consumption rate of a first reagent within a preset time and a first inventory quantity of the first reagent in a reagent repository at a first time point;
calculating a first usable time for the first inventory quantity based on the first historical consumption rate;
obtaining a second historical consumption rate of the first reagent within a preset time and a second inventory quantity of the first reagent in the reagent repository at a second time point, wherein the first historical consumption rate is greater than or equal to 1.5 times the second historical consumption rate; and
calculating a second usable time for the second inventory quantity based on the second historical consumption rate; and
a display configured to display the first usable time or the second usable time.

13. The reagent management system of claim 12, **characterized in that** the first historical consumption rate is greater than or equal to 2 times the second historical consumption rate.

14. A reagent management system, **characterized in that** the reagent management system comprises:
a memory configured to store executable program instructions;
a database configured to record reagent information of reagents circulated in a reagent repository, wherein the reagent information comprises at least reagent names and reagent lot numbers;
one or more processors configured to execute the program instructions stored in the memory that cause the processor to perform the following steps:
obtaining a current inventory quantity of a first reagent in the reagent repository; and
when the current inventory quantity of the first reagent meets a preset condition, obtaining from the database a lot number of the first reagent ordered and/or inbounded last time and outputting purchase information of the first reagent is, wherein the purchase information comprises a reagent name of the first reagent recommended for purchase and the lot number of the first reagent ordered and/or inbounded last time; and
a display configured to display the purchase information.

15. The reagent management system of claim 14, **characterized in that** when a quantity of lot numbers of the first reagent is greater than or equal to 2, the purchase information comprises at least one lot number of the first reagent;
or
**characterized in that** the processor is further configured to perform the following steps:
obtaining a supplier inventory quantity of the first reagent with a lot number in a reagent supplier warehouse management system, which lot number corresponds to the lot number in the purchase information, and obtaining a recommended purchase quantity in the purchase information; and
when the supplier inventory quantity is greater than or equal to the recommended purchase quantity, outputting the purchase information;
or
**characterized in that** when a quantity of lot numbers of the first reagent is greater than or equal to 2, the processor is further configured to perform the following steps:
obtain a supplier inventory quantity of the first reagent with a corresponding lot number in a reagent supplier warehouse, and obtaining a recommended purchase quantity in the purchase information, and
when the supplier inventory quantity for at least one lot number is greater than or equal to the recommended purchase quantity, outputting the purchase information.
